# EUROPEAN PATENT APPLICATION

(11) **EP 4 640 720 A1**
(43) Date of publication of application: **29.10.2025**
(21) Application number: 23907173.1
(22) Date of filing: 22.12.2023
(51) Int. Cl.: C08F 230/08, C08F 2/44, C08F 220/10, C08F 220/26, C08F 220/56, C08F 283/06, C08F 290/06, C08K 5/10, C08L 33/04, C08L 33/26, C08L 43/04, C08L 71/02, G02B 1/04, G02C 7/04

(54) **CURABLE COMPOSITION, SILICONE HYDROGEL, METHOD FOR PRODUCING SILICONE HYDROGEL, AND METHOD FOR PRODUCING CONTACT LENS**

(30) Priority: 22.12.2022 JP 2022205020; 08.02.2023 JP 2023017456; 04.07.2023 JP 2023110081
(71) Applicant: Mitsubishi Chemical Corporation, Tokyo 100-8251 (JP)
(72) Inventor: MISHIMA, Shiori, Tokyo 100-8251 (JP); TSURUOKA, Taiki, Tokyo 100-8251 (JP); TABATA, Daiki, Tokyo 100-8251 (JP)
(74) Representative: Hoffmann Eitle
(86) International application number: PCT/JP2023/046098
(87) International publication number: WO 2024/135813

(57) **Abstract**

A method for producing a silicone hydrogel includes the following steps (1) to (3): a step (1): a step of preparing a curable composition containing a silicone-based (meth)acrylate (A), a hydrophilic monomer (B), and a surfactant (C); a step (2): a step of molding the curable composition with a hydrophobic mold to obtain a cured product; and a step (3): a step of washing the cured product.

## Description

### TECHNICAL FIELD

The present invention relates to a curable composition used for producing a silicone hydrogel having excellent surface hydrophilicity and transparency, which are stable for a long period of time; a silicone hydrogel which is a cured product of the curable composition; a method for producing a silicone hydrogel, and a method for producing a contact lens.

Priority is claimed on Japanese Patent Application No. 2022-205020, filed December 22, 2022, Japanese Patent Application No. 2023-017456, filed February 8, 2023, and Japanese Patent Application No. 2023-110081, filed July 4, 2023, the contents of which are incorporated herein by reference.

### BACKGROUND ART

A silicone hydrogel has been used as a material for a contact lens, an intraocular lens, and the like due to having high oxygen permeability.

In general, a soft contact lens is produced by a cast molding method. A polypropylene mold is often used in this method, but, since polypropylene is hydrophobic, a silicone monomer polymerizes in a segregated state on the mold surface, which tends to reduce hydrophilicity of a lens surface.

When the lens surface is not sufficiently hydrophilic, there is a concern that lipids and proteins are easily attach thereto, leading to clouding of the lens and eye diseases. In addition, since a tear film is likely to break, there is a concern that discomfort such as dryness and friction of the eye or a disease such as blepharitis occurs.

As a technique for improving surface hydrophilicity of the contact lens using such a silicone hydrogel, Patent Document 1 proposes a method of generating plasma after vaporizing a hydrophilic monomer to form a hydrophilic polymer film on the lens surface.

In addition, Patent Document 2 proposes a method in which a contact lens after molding is impregnated with a storage solution containing a surfactant or a hydrophilic polymer, and the surfactant is attached to the surface of the contact lens.

Furthermore, Patent Document 3 proposes a method of improving the hydrophilicity by adding a polymerizable amphiphilic substance and curing the substance to expose a hydrophilic group on the surface.

Patent Document 4 proposes a method of forming a stable hydrophilic surface on the contact lens by using a monomer having a specific structure which strongly interacts with a part of a surfactant.

### Citation List

### Patent Documents

Patent Document 1: Japanese Unexamined Patent Application, First Publication No. S58-216222
Patent Document 2: Japanese Unexamined Patent Application, First Publication No. S61-69023
Patent Document 3: Published Japanese Translation No. H6-503373 of the PCT International Publication
Patent Document 4: Japanese Unexamined Patent Application, First Publication No. 2014-40598

### SUMMARY OF INVENTION

### Technical Problem

However, the plasma treatment proposed in Patent Document 1 requires a very large-scale device, and has problems such as a complicated condition setting for forming the coating film.

In addition, the method proposed in Patent Document 2 has a problem that wettability and surface lubricity of the contact lens cannot be sustained for a long period of time.

In addition, in the method proposed in Patent Document 3, since the amphiphilic substance is copolymerized with other raw materials of the contact lens, there is a problem in that a moisture content and mechanical properties of the contact lens are affected, and physical properties suitable for the contact lens cannot be maintained.

In addition, the method proposed in Patent Document 4 has a problem in that the surfactant is released due to long-term storage, friction during wearing on the eye, or tear replacement, and thus the surface hydrophilicity of the contact lens is reduced.

### Solution to Problem

As a result of intensive studies to solve the above-described problems, the present inventors have found that the above-described problems can be solved by containing a specific amount of a surfactant in a curable composition and curing the curable composition, and have completed the present invention.

That is, the present invention has the following characteristics.
[1] A method for producing a silicone hydrogel, comprising the following steps (1) to (3):
   a step (1): a step of preparing a curable composition containing a silicone-based (meth)acrylate (A), a hydrophilic monomer (B), and a surfactant (C);
   a step (2): a step of molding the curable composition with a hydrophobic mold to obtain a cured product; and
   a step (3): a step of washing the cured product.
[2] The method for producing a silicone hydrogel according to [1],
   wherein the silicone-based (meth)acrylate (A) is a monomer having a siloxanyl group in a molecule.
[3] The method for producing a silicone hydrogel according to [1] or [2],
   wherein the hydrophilic monomer (B) is at least one selected from monomers having, in a molecule, one or more groups selected from a hydroxyl group, an amino group, a carboxyl group, an ionic group, a pyrrolidone group, an amide structure, and a polyalkylene oxide group.
[4] The method for producing a silicone hydrogel according to [1] or [2],
   wherein the hydrophilic monomer (B) is at least one selected from monomers having, in a molecule, one or more groups selected from a hydroxyl group, an amino group, a carboxyl group, an ionic group, a pyrrolidone group, an amide structure (excluding an amide structure with a ring structure having a nitrogen element as a part of the ring structure), and a polyalkylene oxide group.
[5] The method for producing a silicone hydrogel according to any one of [1] to [4],
   wherein the surfactant (C) has an HLB value of 3 to 19.
[6] The method for producing a silicone hydrogel according to any one of [1] to [5],
   wherein the surfactant (C) is a non-polymerizable surfactant.
[7] The method for producing a silicone hydrogel according to any one of [1] to [6],
   wherein the surfactant (C) is a surfactant having a polyoxyethylene group or a sugar-based surfactant.
[8] The method for producing a silicone hydrogel according to any one of [1] to [7],
   wherein a contained amount of water in the curable composition is 0% by mass or more and 10% by mass or less with respect to a total mass of the curable composition.
[9] The method for producing a silicone hydrogel according to any one of [1] to [8],
   wherein a contained amount of the surfactant (C) in the curable composition is 1% by mass or more with respect to a total mass of the curable composition.
[10] The method for producing a silicone hydrogel according to any one of [1] to [9],
   wherein the hydrophobic mold is a mold made of polyolefin.
[11] The method for producing a silicone hydrogel according to any one of [1] to [10],
   wherein the silicone hydrogel is not subjected to a plasma treatment.
[12] A method for producing a contact lens using the method for producing a silicone hydrogel according to any one of [1] to [11].
[13] A curable composition comprising:
   a silicone-based (meth)acrylate (A);
   a hydrophilic monomer (B); and
   a surfactant (C).
[14] The curable composition according to [13],
   wherein the silicone-based (meth)acrylate (A) is a monomer having a siloxanyl group in a molecule.
[15] The curable composition according to [13] or [14],
   wherein the hydrophilic monomer (B) is at least one selected from monomers having, in a molecule, one or more groups selected from a hydroxyl group, an amino group, a carboxyl group, an ionic group, a pyrrolidone group, an amide structure, and a polyalkylene oxide group.
[16] The curable composition according to [13] or [14],
   wherein the hydrophilic monomer (B) is at least one selected from monomers having, in a molecule, one or more groups selected from a hydroxyl group, an amino group, a carboxyl group, an ionic group, a pyrrolidone group, an amide structure (excluding an amide structure with a ring structure having a nitrogen element as a part of the ring structure), and a polyalkylene oxide group.
[17] The curable composition according to any one of [13] to [16],
   wherein the surfactant (C) has an HLB value of 3 to 19.
[18] The curable composition according to any one of [13] to [17],
   wherein the surfactant (C) is a non-polymerizable surfactant.
[19] The curable composition according to any one of [13] to [18],
   wherein the surfactant (C) is a surfactant having a polyoxyethylene group or a sugar-based surfactant.
[20] The curable composition according to any one of [13] to [19],
   wherein a contained amount of water in the curable composition is 0% by mass or more and 10% by mass or less with respect to a total mass of the curable composition.
[21] The curable composition according to any one of [13] to [20],
   wherein a contained amount of the surfactant (C) in the curable composition is 1% by mass or more with respect to a total mass of the curable composition.
[22] The curable composition according to any one of [13] to [21],
   wherein two or more kinds of surfactants are contained as the surfactant (C).
[23] The curable composition according to [22],
   wherein at least one of the two or more kinds of the surfactants (C) is a sugar fatty acid ester (C2), and the other is a surfactant other than the sugar fatty acid ester (C2).
[24] The curable composition according to [23],
   wherein the surfactant other than the sugar fatty acid ester (C2) is a surfactant having a polyoxyethylene group.
[25] The curable composition according to [24],
   wherein the surfactant having a polyoxyethylene group is any one of polyoxyethylene hydrogenated castor oils, polyoxyethylene castor oil, polyoxyethylene glycerin fatty acid ester, or polyoxyethylene alkylene ether.
[26] A silicone hydrogel which is a cured product of the curable composition according to any one of [13] to [25].
[27] The silicone hydrogel according to [26],
   wherein a haze measured in accordance with JIS K 7136: 2000 is 0.1 or more and 7 or less.
[28] The curable composition according to any one of [13] to [25],
   wherein a haze of a silicone hydrogel obtained by curing the curable composition is 0.1 or more and 7 or less, the haze being measured in accordance with JIS K 7136:2000.
[29] A curable composition comprising:
   a silicone-based (meth)acrylate (A);
   a hydrophilic monomer (B); and
   two or more kinds of surfactants (C).
[30] The curable composition according to [29],
   wherein at least one of the two or more kinds of the surfactants (C) is a sugar fatty acid ester (C2).
[31] The curable composition according to [30],
   wherein the sugar fatty acid ester (C2) has an HLB value of 5 or more.
[32] The curable composition according to [30] or [31],
   wherein the sugar fatty acid ester (C2) is a disaccharide fatty acid ester.
[33] The curable composition according to any one of [29] to [32],
   wherein at least one of the two or more kinds of the surfactants (C) is a sugar fatty acid ester (C2), and the other is a surfactant other than the sugar fatty acid ester (C2).
[34] The curable composition according to [33],
   wherein the surfactant other than the sugar fatty acid ester (C2) is a surfactant having a polyoxyethylene group.
[35] The curable composition according to [34],
   wherein the surfactant having a polyoxyethylene group is any one of polyoxyethylene hydrogenated castor oils, polyoxyethylene castor oil, polyoxyethylene glycerin fatty acid ester, or polyoxyethylene alkylene ether.
[36] The curable composition according to any one of [29] to [35],
   wherein the curable composition is for a silicone hydrogel.
[37] The curable composition according to any one of [29] to [36],
   wherein the silicone-based (meth)acrylate (A) is a monomer having a siloxanyl group in a molecule.
[38] The curable composition according to any one of [29] to [37],
   wherein the hydrophilic monomer (B) is a monomer having, in a molecule, one or more groups selected from a hydroxyl group, an amino group, a carboxyl group, an ionic group, an amide structure, and a polyalkylene oxide group.
[39] A method for producing the curable composition according to any one of [29] to [38],
   wherein the hydrophilic monomer (B) is a monomer (B1) having an amide structure.
[40] A method for producing a silicone hydrogel, comprising the following steps (1) to (3):
   a step (1): a step of preparing a curable composition containing a silicone-based (meth)acrylate (A), a hydrophilic monomer (B), and two or more kinds of surfactants (C);
   a step (2): a step of molding the curable composition with a hydrophobic mold to obtain a cured product; and
   a step (3): a step of washing the cured product.
[41] The method for producing a silicone hydrogel according to [40],
   wherein at least one of the two or more kinds of the surfactants (C) is a sugar fatty acid ester (C2).
[42] The method for producing a silicone hydrogel according to [40] or [41],
   wherein at least one of the two or more kinds of the surfactants (C) is a sugar fatty acid ester (C2), and the other is a surfactant other than the sugar fatty acid ester (C2).
[43] The method for producing a silicone hydrogel according to [42],
   wherein the surfactant other than the sugar fatty acid ester (C2) is a surfactant having a polyoxyethylene group.
[44] The method for producing a silicone hydrogel according to [43],
   wherein the surfactant having a polyoxyethylene group is any one of polyoxyethylene hydrogenated castor oils, polyoxyethylene castor oil, polyoxyethylene glycerin fatty acid ester, or polyoxyethylene alkylene ether.
[45] The method for producing a silicone hydrogel according to any one of [40] to [44],
   wherein the hydrophobic mold is a mold made of polyolefin.
[46] The method for producing a silicone hydrogel according to any one of [40] to [45],
   wherein the silicone hydrogel is not subjected to a plasma treatment.
[47] A method for producing a contact lens using the method for producing a silicone hydrogel according to any one of [40] to [46].

### Advantageous Effects of Invention

According to the method for producing a silicone hydrogel of the present invention, even when a hydrophobic mold such as polypropylene is used, a silicone hydrogel having excellent surface hydrophilicity and transparency, which are stable for a long period of time, can be obtained without performing a surface treatment such as a plasma treatment.

According to the method for producing a contact lens of the present invention, a contact lens having excellent surface hydrophilicity and transparency, which are stable for a long period of time, can be obtained.

According to the curable composition of the present invention, a silicone hydrogel having excellent surface hydrophilicity and transparency, which are stable for a long period of time, can be obtained.

The silicone hydrogel according to the present invention has excellent surface hydrophilicity and transparency, and thus is particularly useful as a device for an eye, such as a contact lens, an intraocular lens, and an artificial cornea.

According to the curable composition of the present invention, a silicone hydrogel having excellent surface hydrophilicity and transparency, which are stable for a long period of time, can be provided.

According to the method for producing a silicone hydrogel of the present invention, even when a hydrophobic mold such as polypropylene is used, a silicone hydrogel having excellent surface hydrophilicity and transparency, which are stable for a long period of time, can be obtained without performing a surface treatment such as a plasma treatment.

According to the method for producing a contact lens of the present invention, a contact lens having excellent surface hydrophilicity and transparency, which are stable for a long period of time, can be obtained.

### BRIEF DESCRIPTION OF DRAWINGS

[FIG. 1] A perspective view representing an example of a contact lens.
[FIG. 2] A cross-sectional view representing the example of the contact lens.

### DESCRIPTION OF EMBODIMENTS

Hereinafter, embodiments of the present invention will be described. The following embodiments are merely examples for explaining the present invention, and the present invention is not intended to be limited only to these embodiments. The present invention can be carried out in various aspects as long as the various aspects maintain the gist of the invention.

In the present invention, "(meth)acrylate" is a generic term for acrylate and methacrylate.

In the present invention, "non-polymerizable" means that monomer components such as the silicone-based (meth)acrylate (A) and the hydrophilic monomer (B) in the curable composition do not chemically bond to each other and do not become immobilized in a cured product in a polymerization reaction during curing.

### <Curable composition>

The curable composition according to the embodiment of the present invention contains a silicone-based (meth)acrylate (A), a hydrophilic monomer (B), and a surfactant (C).

Hereinafter, each component constituting the curable composition will be described.

### <Silicone-based (meth)acrylate (A)>

The silicone-based (meth)acrylate (A) used in the present invention is a component which contributes to oxygen permeability, transparency, mechanical strength, hydrophilicity, and the like of a silicone hydrogel.

The silicone-based (meth)acrylate (A) preferably has a siloxanyl group in a molecule.

In addition, the silicone-based (meth)acrylate (A) may be any of a monomer, a macromonomer, or a prepolymer.

Examples of the silicone-based (meth)acrylate (A) include trimethylsiloxydimethylsilylmethyl (meth)acrylate, trimethylsiloxydimethylsilylpropyl (meth)acrylate, methylbis(trimethylsiloxy)silylpropyl (meth)acrylate, tris(trimethylsiloxy)silylpropyl (meth)acrylate, mono[methylbis(trimethylsiloxy)siloxy]bis(trimethylsiloxy)silylpropyl (meth)acrylate, tris[methylbis(trimethylsiloxy)siloxy]silylpropyl (meth)acrylate, methylbis(trimethylsiloxy)silylpropylglyceryl (meth)acrylate, tris(trimethylsiloxy)silylpropylglyceryl (meth)acrylate, mono[methylbis(trimethylsiloxy)siloxy]bis(trimethylsiloxy)silylpropylglyceryl (meth)acrylate, trimethylsilylethyltetramethyldisiloxypropyl glyceryl (meth)acrylate, trimethylsiloxydimethylsilylpropylglyceryl (meth)acrylate, methylbis(trimethylsiloxy)silylethyltetramethyldisiloxymethyl (meth)acrylate, tetramethyltriisopropylcyclotetrasiloxanylpropyl (meth)acrylate, and tetramethyltriisopropylcyclotetrasiloxybis(trimethylsiloxy)silylpropyl (meth)acrylate.

Examples of the silicone-based (meth)acrylate (A) include a compound (A1) and a compound (A2) described below.

### [Compound (A1)]

The compound (A1) is a silicone (meth)acrylate represented by Formula (1).

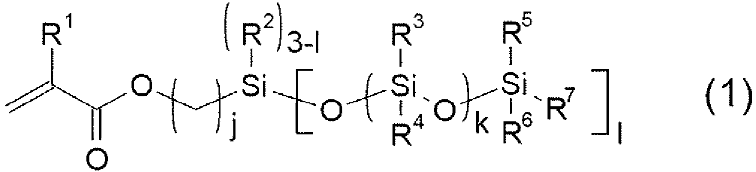

In Formula (1), R¹ represents a hydrogen atom or a methyl group. R² to R⁷ each independently represent an alkyl group, an alkoxy group, or an alkoxyalkyl group, which may have a substituent. j is a natural number of 1 to 10, k is a natural number of 1 to 30, and 1 is a natural number of 1 to 3. When 1 is 1, a plurality of R²'s may be the same or different from each other, and when 1 is 2 or more, a plurality of R³'s to R⁷'s may be the same or different from each other. In addition, when k is 2 or more, a plurality of R³'s and R⁴'s may be the same or different from each other.

From the viewpoint of easy availability, R¹ is preferably a methyl group.

Examples of the alkyl group for R² to R⁷ include branched or linear alkyl groups having 1 to 22 carbon atoms; and specific examples thereof include a methyl group, an ethyl group, an n-propyl group, an i-propyl group, an n-butyl group, a t-butyl group, an i-butyl group, a pentyl group (amyl group), an i-pentyl group, a hexyl group, a heptyl group, a 2-ethylhexyl group, an octyl group, an i-octyl group, a nonyl group, an i-nonyl group, a decyl group, an i-decyl group, an undecyl group, a dodecyl group (lauryl group), a tridecyl group, a tetradecyl group, a pentadecyl group, a hexadecyl group, a heptadecyl group, an octadecyl group (stearyl group), an i-octadecyl group, a nonadecyl group, an icosyl group, and a docosyl group.

Examples of the alkoxy group for R² to R⁷ include branched or linear alkoxy groups having 1 to 22 carbon atoms; and specific examples thereof include a methoxy group, an ethoxy group, a propoxy group, and a butoxy group.

Examples of the alkoxyalkyl group for R² to R⁷ include branched or linear alkoxy groups having 1 to 22 carbon atoms; and specific examples thereof include a methoxymethyl group, a methoxyethyl group, a methoxypropyl group, a methoxybutyl group, an ethoxymethyl group, an ethoxyethyl group, an ethoxypropyl group, an ethoxybutyl group, a propoxymethyl group, a propoxyethyl group, a propoxypropyl groups, a propoxybutyl group, a butoxymethyl group, a butoxyethyl group, a butoxypropyl group, and a butoxybutyl group.

In addition, R² to R⁷ may be a halogenated alkyl group, and examples of the halogen include fluorine, chlorine, bromine, and iodine.

Among these, from the viewpoint of compatibility, R² is preferably an unsubstituted or substituted alkyl group; more preferably a methyl group, an ethyl group, an n-propyl group, an i-propyl group, an n-butyl group, a t-butyl group, or an i-butyl group; and still more preferably a methyl group.

In addition, from the viewpoint of compatibility, R³ to R⁷ are preferably an alkyl group or a halogenated alkyl group; and more preferably a methyl group, an ethyl group, an n-propyl group, an i-propyl group, an n-butyl group, a t-butyl group, an i-butyl group, a fluoromethyl group, a difluoromethyl group, a trifluoromethyl group, a 1-fluoroethyl group, a 2-fluoroethyl group, a 1,1-difluoroethyl group, a 1,2-difluoroethyl group, a 2,2-difluoroethyl group, a 2,2,2-trifluoroethyl group, a 3,3,3-trifluoropropyl group, or a 1-trifluoromethylethyl group.

From the viewpoint of improving oxygen permeability of the silicone hydrogel, it is preferable that at least one of R³ to R⁷ is an alkyl halide group, and it is more preferable that at least one of R³ to R⁷ is a fluorinated alkyl group.

j is a natural number of 1 to 10, preferably 1 to 5.

k is a natural number of 1 to 30, preferably 1 to 20. The compound (A1) may be a mixture of a plurality of compounds having different k.

1 is a natural number of 1 to 3, preferably 1 or 2.

Among the above, from the viewpoint of compatibility, oxygen permeability, and availability, at least one of the following compounds is preferable as the compound (A1).
· A compound in which, in Formula (1), R¹ to R⁶ are methyl groups, R⁷ is an n-butyl group, j is 3, and l is 1 ("Silaplane (registered trademark) FM-0711", "Silaplane (registered trademark) FM-0721", and "Silaplane (registered trademark) FM-0725" manufactured by JNC Corporation; and "MCR-M07" and "MCR-M11" manufactured by Gelest Inc.)
· A compound in which, in Formula (1), R¹, R², R⁴, and R⁶ are methyl groups, R³ and R⁵ are 3,3,3-trifluoropropyl groups, R⁷ is an n-butyl group, j is 3, and l is 1 ("MFR-M15" manufactured by Gelest Inc.)
· A compound in which, in Formula (1), R¹ to R⁶ are methyl groups, R⁷ is an n-butyl group, j is 3, and l is 2 ("MCS-M11" manufactured by Gelest, Inc.)
· A compound in which, in Formula (1), R¹ to R⁶ are methyl groups, R⁷ is a methoxypropyl group, j is 3, and l is 2 ("MCS-MX11" manufactured by Gelest, Inc.)
· A compound in which, in Formula (1), R¹, R², R⁴, and R⁶ are methyl groups, R³ and R⁵ are 3,3,3-trifluoropropyl groups, R⁷ is an n-butyl group, j is 3, and l is 2 ("MFS-M15" manufactured by Gelest, Inc.)

### [Compound (A2)]

The compound (A2) is a silicone (meth)acrylate represented by Formula (2).

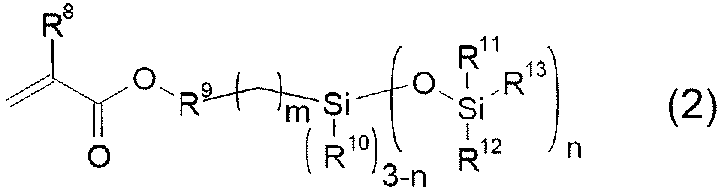

In Formula (2), R⁸ represents a hydrogen atom or a methyl group. R⁹ represents a single bond, or an alkylene group, an alkylene oxide group, a polyalkylene oxide group, or an alkylene-oxy-alkylene group, which may have a substituent.

R¹⁰ to R¹³ each independently represent an alkyl group, an alkoxy group, or an alkoxyalkyl group, which may have a substituent. m is a natural number of 1 to 10 and n is a natural number of 1 to 3. When n is 1, a plurality of R¹⁰'s may be the same or different from each other. When n is 2 or more, a plurality of R¹¹'s to R¹³'s may be the same or different from each other.

From the viewpoint of easy availability, R⁸ is preferably a methyl group.

The alkylene group, the alkylene oxide group, the polyalkylene oxide group, and the alkylene-oxy-alkylene group for R⁹ are each a group obtained by converting the same ones as the alkyl group, the alkoxy group, and the alkoxyalkyl group described in R² to R⁷ in Formula (1) above into a divalent substituent.

From the viewpoint of surface hydrophilicity and transparency of the silicone hydrogel, R⁹ is preferably a single bond, an unsubstituted or substituted alkylene oxide group, or an alkylene-oxy-alkylene group; and more preferably a single bond or an unsubstituted or substituted alkylene oxide group.

The alkyl group, the alkoxy group, and the alkoxyalkyl group for R¹⁰ to R¹³ are the same as those described for R² to R⁷ in Formula (1) above. In addition, R¹⁰ to R¹³ may be a halogenated alkyl group, and examples of the halogen include fluorine, chlorine, bromine, and iodine.

Among these, R¹⁰ to R¹³ are each preferably an unsubstituted or substituted alkyl group; more preferably a methyl group, an ethyl group, an n-propyl group, an i-propyl group, an n-butyl group, a t-butyl group, or an i-butyl group; and still more preferably a methyl group.

### m is a natural number of 1 to 10, preferably 1 to 5.

In addition, n is a natural number of 1 to 3, and is preferably 2 or 3 from the viewpoint of improving the surface hydrophilicity and the transparency of the silicone hydrogel.

Among the above, at least one of the following compounds is preferable as the compound (A2).
· A compound in which, in Formula (2), R⁸ is a methyl group, R⁹ is a single bond, R¹¹ to R¹³ are methyl groups, m is 3, and n is 3 (TRIS, "SIM6487.6" manufactured by Gelest, Inc.)
· A compound in which, in Formula (2), R⁸ is a methyl group, R⁹ is CH₂CH(OH)CH₂O, R¹⁰ to R¹³ are methyl groups, m is 3, and n is 2 (SIMMA, "SIM6481.15" manufactured by Gelest, Inc. and "BX-SiGMMA" manufactured by Bimax)

The silicone-based (meth)acrylate (A) may be used alone or in combination of two or more kinds thereof.

Among these, from the viewpoint of improving the surface hydrophilicity, transparency, and flexibility of the silicone hydrogel, it is preferable to use the compound (A1) and the compound (A2) in combination.

### <Hydrophilic monomer (B)>

The hydrophilic monomer (B) used in the present invention is a component which contributes to hydrophilicity of the silicone hydrogel.

The hydrophilic monomer (B) is preferably at least one selected from monomers having, in a molecule, one or more groups selected from a hydroxyl group, an amino group, a carboxyl group, an ionic group, an amide structure, and an alkyleneoxy structure.

In addition, the hydrophilic monomer (B) may be any of a monomer, a macromonomer, and a prepolymer.

Examples of the hydrophilic monomer (B) include monomers having a hydroxyl group, such as 2-hydroxyethyl (meth)acrylate, 2,3-dihydroxypropyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, and 4-hydroxybutyl (meth)acrylate; monomers having an amino group, such as N,N-dimethylaminoethyl (meth)acrylate; monomers having a carboxyl group such as (meth)acryloxyethylsuccinic acid; monomers having an ionic group, such as (3-(meth)acrylamidopropyl)trimethylammonium chloride, (meth)acryloxyethyldimethylbenzylammonium chloride, 3-((meth)acrylamido)propyl dimethylbenzylammonium chloride, (meth)acryloylcholine chloride, and 2-(meth)acryloyloxyethylphosphorylcholine; monomers having a pyrrolidone group, such as N-vinyl-2-pyrrolidone; monomers having an amide structure, such as N-hydroxymethyl(meth)acrylamide, N-(2-hydroxyethyl)(meth)acrylamide, (meth)acrylamide, N-vinylacetamide, N,N-dimethyl(meth)acrylamide, N,N-diethyl(meth)acrylamide, N-isopropyl(meth)acrylamide, 4-acryloylmorpholine, and (meth)acrylamide; and monomers having a polyalkylene oxide group, such as polyethylene glycol (meth)acrylate.

Among the hydrophilic monomers (B), a monomer (B1) having an amide structure is preferable from the viewpoint of improving wettability and lubricity of a surface of the silicone hydrogel. Here, the amide structure is preferably a divalent group in which a carboxy group is bonded to a nitrogen atom of a chain-like or cyclic amino compound, excluding a lactam structure.

Examples of the monomer (B1) having an amide structure include acrylamide; N-substituted acrylamides such as N,N-dimethylacrylamide, N,N-diethylacrylamide, N-(2-hydroxyethyl)acrylamide, N-isopropylacrylamide, and acryloylmorpholine; and N-vinylacetamide. The total number of carbon atoms of substituents on the nitrogen in the N-substituted acrylamide is preferably 0 to 6, more preferably 2 to 6, and still more preferably 2 to 4.

The monomer (B1) having an amide structure may be used alone or in combination of two or more kinds thereof.

### <Surfactant (C)>

The surfactant (C) used in the present invention has an effect of increasing hydrophilicity of the surface of the silicone hydrogel by hydrophilizing the hydrophobic mold used in curing of the silicone hydrogel in a pseudo manner and suppressing segregation of the silicone-based (meth)acrylate (A) having hydrophobicity on the surface of the silicone hydrogel.

HLB of the surfactant (C) is preferably 3 to 19, more preferably 5 to 18, and still more preferably 10 to 17.

The surfactant (C) preferably includes a non-polymerizable surfactant.

The surfactant (C) may be one kind of surfactant, but from the viewpoint of stabilizing an interface, it is more preferable to consist of two or more kinds of surfactants, and among these, it is still more preferable that at least one kind of the surfactants is a sugar fatty acid ester (C2).

### <Sugar fatty acid ester (C2)>

The sugar fatty acid ester (C2) is a surfactant in which a sugar and a fatty acid are ester-bonded, and examples thereof include a monosaccharide fatty acid ester and a disaccharide fatty acid ester.

Examples of the monosaccharide fatty acid ester include sorbitan fatty acid ester and xylitol fatty acid ester.

Examples of the disaccharide fatty acid ester include sucrose fatty acid ester, glucose fatty acid ester, trehalose fatty acid ester, maltose fatty acid ester, cellobiose fatty acid ester, and lactose fatty acid ester.

Among the sugar fatty acid esters (C2), the disaccharide fatty acid ester is preferable since the hydrophilic sugar unit is bulky and thus a more hydrophilic surface is easily formed when a fatty acid group is adsorbed on a hydrophobic surface. Here, the "disaccharide fatty acid ester" is a compound having a structure derived from a disaccharide in which a sugar structure consists of two molecules of monosaccharides, in which a fatty acid is ester-bonded to the disaccharide.

Furthermore, among the disaccharide fatty acid esters, sucrose fatty acid ester or trehalose fatty acid ester is preferable since the hydrophilicity of the sugar unit is high and the crystallinity is high, and thus a more dense hydrophilic surface is easily formed.

An HLB value of the sugar fatty acid ester (C2) is preferably 5 to 19, more preferably 11 to 19, and still more preferably 15 to 19, from the viewpoint that, as the HLB value is larger, the sugar fatty acid ester (C2) is more hydrophilic, and thus the sugar fatty acid ester (C2) is easily dissolved in water.

The HLB value is an index which represents a balance between a hydrophilic group and a lipophilic group of an emulsifier, is represented by a value of 0 to 20, and as the numerical value is larger, the hydrophilicity is greater.

An HLB value of a nonionic emulsifier is calculated, for example, by Griffin's empirical formula: HLB = 20 × (1 - SV/NV).

Here, SV indicates a saponification value of an ester, and NV indicates a neutralization value of a fatty acid ("Polyglycerin Ester" published by Sakamoto Yakuhin Kogyo Co., Ltd., and the like).

Examples of the sorbitan fatty acid ester having an HLB value of 5 or more include a sorbitan fatty acid ester in which a fatty acid having 8 to 22 carbon atoms is a constituent fatty acid.

The number of carbon atoms in the fatty acid is preferably 12 to 22 and more preferably 12 to 18.

The surfactant (C) may be nonionic or ionic, but the HLB value thereof is preferably 3 to 19 from the viewpoint that the surfactant (C) has surface hydrophilicity and elutes during washing of the silicone hydrogel. The lower limit of the HLB value is more preferably 5 or more.

A surfactant other than the sugar fatty acid ester (C2) may be contained as the surfactant (C). As the surfactant other than the sugar fatty acid ester (C2), a surfactant having a polyoxyethylene group, a sugar-based surfactant, a surfactant derived from a biologically derived material, or the like is preferable.

Examples of the surfactant having a polyoxyethylene group include polyoxyethylene alkyl ethers such as polyoxyethylene hydrogenated castor oil, polyoxyethylene castor oil, polyoxyethylene glycerin fatty acid ester, polyoxyethylene lauryl ether, and polyoxyethylene oleyl ether; a polyoxyethylene-polyoxypropylene copolymer, polyoxyethylene-polysiloxane ether block copolymer, polyoxyethylene-polyoxypropylene ethylene diamine, and polyoxyethylene-polyoxypropylene alkyl ether; polyoxyethylene sorbitan fatty acid esters (polysorbate), such as polyoxyethylene sorbitan monoleate (for example, polysorbate 80); polyoxyethylene sorbitol fatty acid esters; polyoxyethylene alkylphenyl ethers; polyoxyethylene alkylphenyl ether-formaldehyde condensates such as tyloxapol; polyoxyethylene sterol; polyoxyethylene hydrogenated sterol; polyoxyethylene fatty acid esters such as polyethylene glycol monostearate; and polyoxyethylene lanolin alcohol, polyoxyethylene alkylamine, polyoxyethylene alkylamide, and polyoxyethylene alkyl ether phosphate.

The sugar-based surfactant is a nonionic surfactant having a sugar as a hydrophilic group.

Examples of the sugar-based surfactant include a sugar fatty acid ester in which a sugar and a fatty acid are ester-bonded, and an alkyl glycoside in which a sugar and a higher alcohol are glycosidically bonded; and among these, a sugar fatty acid ester is preferable.

It is preferable that the fatty acid of the above-described sugar fatty acid ester is a fatty acid.

Examples of the sugar fatty acid ester include sucrose fatty acid ester, sorbitan fatty acid ester, and glucose ester; and among these, sucrose fatty acid ester is preferable.

The number of carbon atoms in the constitutional fatty acid of the sugar fatty acid ester is not particularly limited, but is preferably 8 to 22 and more preferably 12 to 18. The fatty acid may be a saturated fatty acid, an unsaturated fatty acid, or a mixture thereof.

Examples of the fatty acid having 8 to 22 carbon atoms include caprylic acid (8), capric acid (10), lauric acid (12), myristic acid (14), pentadecylic acid (15), palmitic acid (16), margarinic acid (17), stearic acid (18), oleic acid (18), and behenic acid (22).

Here, the numerical value described in parentheses is the number of carbon atoms of each fatty acid.

It is sufficient that the HLB value of the sorbitan fatty acid ester is 5 or more, and it is preferably 11 or more and more preferably in a range of 15 to 18.

When the HLB value is equal to or more than the lower limit value, the hydrophilicity of the surface of the silicone hydrogel can be increased.

The HLB value of the sorbitan fatty acid ester can be adjusted by the number of carbon atoms of the fatty acid constituting the sorbitan fatty acid ester, and the number of fatty acid ester groups.

The number of fatty acid ester groups in the sorbitan fatty acid ester is 1 to 4.

In addition, the sorbitan fatty acid ester may have a polyoxyethylene group as necessary, in order to adjust the HLB value.

Examples of the sucrose fatty acid ester having an HLB value of 5 or more include a sucrose fatty acid ester in which a fatty acid having 8 to 22 carbon atoms is a constituent fatty acid.

The number of carbon atoms in the fatty acid is preferably 12 to 22 and more preferably 12 to 18.

Specific examples of the fatty acid having 8 to 22 carbon atoms are the same as those described in the section of sorbitan fatty acid ester.

It is sufficient that the HLB value of the sucrose fatty acid ester is 5 or more, and it is preferably 11 or more and more preferably in a range of 15 to 18.

When the HLB value is equal to or more than the lower limit value, the hydrophilicity of the surface of the silicone hydrogel can be increased.

The HLB value of the sucrose fatty acid ester can be adjusted by the number of carbon atoms of the fatty acid constituting the sucrose fatty acid ester, and the number of fatty acid ester groups.

The number of fatty acid ester groups in the sucrose fatty acid ester is 1 to 8.

Examples of the glucose fatty acid ester having an HLB value of 5 or more include a glucose fatty acid ester in which a fatty acid having 8 to 22 carbon atoms is a constituent fatty acid.

The number of carbon atoms in the fatty acid is preferably 12 to 22 and more preferably 12 to 18.

Specific examples of the fatty acid having 8 to 22 carbon atoms are the same as those described in the section of sorbitan fatty acid ester.

It is sufficient that the HLB value of the glucose fatty acid ester is 5 or more, and it is preferably 11 or more and more preferably in a range of 15 to 18.

When the HLB value is equal to or more than the lower limit value, the hydrophilicity of the surface of the silicone hydrogel can be increased.

Examples of the trehalose fatty acid ester having an HLB value of 5 or more include a trehalose fatty acid ester in which a fatty acid having 8 to 22 carbon atoms is a constituent fatty acid.

The number of carbon atoms in the fatty acid is preferably 8 to 18 and more preferably 8 to 16.

Specific examples of the fatty acid having 8 to 22 carbon atoms are the same as those described in the section of sorbitan fatty acid ester.

It is sufficient that the HLB value of the trehalose fatty acid ester is 5 or more, and it is preferably 11 or more and more preferably in a range of 15 to 18.

When the HLB value is equal to or more than the lower limit value, the hydrophilicity of the surface of the silicone hydrogel can be increased.

As the sugar fatty acid ester (C2), a sucrose fatty acid ester or a trehalose fatty acid ester, having an HLB value of 11 or more, is preferable; a sucrose fatty acid ester or a trehalose fatty acid ester, having an HLB value of 15 or more, is more preferable; and a sucrose fatty acid ester or a trehalose fatty acid ester, having an HLB value of 16 or more, is still more preferable.

The sucrose fatty acid ester is preferably a sucrose fatty acid ester having an HLB value of 13 or more when the number of carbon atoms in the fatty acid is 12 (lauric acid), having an HLB value of 13 or more when the number of carbon atoms in the fatty acid is 14 (myristic acid), or an HLB value of 13 or more when the number of carbon atoms in the fatty acid is 16 (palmitic acid).

The sucrose fatty acid ester is more preferably a sucrose fatty acid ester having an HLB value of 13 or more when the number of carbon atoms in the fatty acid is 12 (lauric acid), or having an HLB value of 13 or more when the number of carbon atoms in the fatty acid is 14 (myristic acid).

The sucrose fatty acid ester is still more preferably a sucrose fatty acid ester having an HLB value of 13 or more when the number of carbon atoms in the fatty acid is 12 (lauric acid).

Examples of a commercially available product of the sucrose fatty acid ester include L-1695 (HLB value: 16, lauric acid), M-1695 (HLB value: 16, myristic acid), P-1570 (HLB value: 15, palmitic acid), P-1670 (HLB value: 16, palmitic acid), S-1570 (HLB value: 15, stearic acid), and S-1670 (HLB value: 16, stearic acid) of RYOTO Sugar Ester (manufactured by Mitsubishi Chemical Corporation, trade name).

The number of fatty acid ester groups in the sugar fatty acid ester varies depending on the number of hydroxyl groups capable of forming an ester bond in the molecular structure of the sugar, which is a hydrophilic group; and for example, the number of fatty acid ester groups in the sucrose fatty acid ester is 1 to 8, and the number of fatty acid ester groups in the sorbitan fatty acid ester is 2 to 4.

The HLB value of the sugar fatty acid ester can be adjusted depending on the number of fatty acid ester groups.

The surfactant derived from a biologically derived material is a surfactant using a biological material such as hyaluronic acid and vitamin as a raw material.

Examples of the surfactant derived from a biologically derived material include a hyaluronic acid derivative in which a hydrophobic group is imparted to a part of a hydrophilic group of a low-molecular-weight hyaluronic acid which is obtained by hydrolyzing high-molecular-weight hyaluronic acid through a glycerin skeleton, such as hydrolyzed hyaluronic acid alkyl (C12-13) glycerol; a vitamin C derivative such as palmitic acid L-ascorbyl, stearic acid L-ascorbyl, 2,6-dibutyryl-L-ascorbic acid, and 2-O-α-D-glucopyranosyl-L-ascorbic acid; and a vitamin E derivative such as DL-α-tocopherol acetate, DL-α-tocopheryl sodium phosphate, and D-α-tocopherol succinate.

The surfactant (C) may be used alone or in combination of two or more kinds thereof.

The curable composition according to the embodiment of the present invention can further contain an optional component in addition to the silicone-based (meth)acrylate (A), the hydrophilic monomer (B), and the surfactant (C).

Examples of the optional component include a crosslinking agent (D), a polymerization initiator (E), and other components.

### <Crosslinking agent (D)>

The curable composition according to the embodiment of the present invention can contain a crosslinking agent (D) for the purpose of improving solvent resistance of the obtained silicone hydrogel and adjusting an elastic modulus, a moisture content, and the like.

The crosslinking agent (D) preferably has two or more polymerizable unsaturated groups.

Examples of the crosslinking agent (D) include a (meth)acrylate-based crosslinking agent such as ethylene glycol di(meth)acrylate, diethylene glycol di(meth)acrylate, triethylene glycol di(meth)acrylate, tetraethylene glycol di(meth)acrylate, polyethylene glycol di(meth)acrylate, allyl methacrylate, trimethylolpropane tri(meth)acrylate, (2-allyloxy)ethyl methacrylate, and 2-(2-vinyloxyethoxy)ethyl (meth)acrylate; a vinyl ether-based crosslinking agent such as ethylene glycol divinyl ether, diethylene glycol divinyl ether, and triethylene glycol divinyl ether; an allyl ether-based crosslinking agent such as triethylene glycol diallyl ether and tetraethylene glycol diallyl ether; and methylenediacrylamide.

Among the crosslinking agents (D), the (meth)acrylate-based crosslinking agent is preferable, and ethylene glycol di(meth)acrylate or polyethylene glycol di(meth)acrylate is more preferable.

The crosslinking agent (D) may be used alone or in combination of two or more kinds thereof.

A contained amount of the crosslinking agent (D) is preferably 0.1% to 10% by mass and more preferably 0.5% to 5% by mass with respect to the total mass of the curable composition. When the contained amount is within the above-described range, moldability and solvent resistance of the silicone hydrogel are improved.

### <Polymerization initiator (E)>

In order to effectively proceed the polymerization reaction, the curable composition according to the embodiment of the present invention can contain a polymerization initiator (E).

Examples of the polymerization initiator include known photopolymerization initiators and known thermal polymerization initiators.

Examples of the photopolymerization initiator include benzyl, benzophenone, or derivatives thereof, thioxanthones, benzyl dimethyl ketals, α-hydroxyalkylphenones, α-hydroxyacetophenones, hydroxyketones, aminoalkylphenones, acylphosphine oxides, and oxime ester compounds.

Among the above, α-hydroxyalkylphenones are less likely to cause yellowing during curing and are able to obtain a transparent cured product, which is preferable.

Examples of the thermal polymerization initiator include known organic peroxides and azo compounds.

The polymerization initiator (E) may be used alone or in combination of two or more kinds thereof.

An addition amount of the polymerization initiator (E) in the curable composition is preferably 0.1 to 3 parts by mass, more preferably 0.1 to 2 parts by mass, and still more preferably 0.2 to 1 part by mass when the total amount of the monomer components in the curable composition is set to 100 parts by mass.

When the addition amount of the polymerization initiator (E) is 0.1 to 3 parts by mass, a polymerization rate is increased, and a decomposition product derived from the polymerization initiator (E) is less likely to remain.

### <Other components>

The curable composition according to the embodiment of the present invention can contain other monomers (monomers other than the silicone-based (meth)acrylate (A) and the hydrophilic monomer (B)), a polymerizable ultraviolet absorber, a polymerizable coloring agent, and the like, as long as the object of the present invention is not impaired.

### <Ratio of curable composition>

The monomer components in the curable composition are the silicone-based (meth)acrylate (A), the hydrophilic monomer (B), the crosslinking agent (D) as the optional component, and the other monomers described in other components; and the surfactant (C) and water are not included in the monomer components.

A contained amount of the silicone-based (meth)acrylate (A) is preferably 4% to 70% by mass and more preferably 10% to 50% by mass with respect to the total mass of the curable composition. When the contained amount is within the above-described range, the surface hydrophilicity, transparency, and oxygen permeability of the silicone hydrogel are improved.

A contained amount of the compound (A1) is preferably 2% to 40% by mass and more preferably 5% to 30% by mass with respect to the total mass of the curable composition.

A contained amount of the compound (A2) is preferably 2% to 68% by mass and more preferably 5% to 40% by mass with respect to the total mass of the curable composition.

The total contained amount of the compound (A1) and the compound (A2) is preferably 4% to 70% by mass and more preferably 10% to 50% by mass with respect to the total mass of the curable composition.

The total contained amount of the compound (A1) and the compound (A2) is preferably 0% to 100% by mass and more preferably 30% to 100% by mass with respect to the total mass of the silicone-based (meth)acrylate (A).

A mass ratio represented by [compound (Al)]/[compound (A2)] is preferably 0.1 or more and more preferably 0.3 or more.

A contained amount of the hydrophilic monomer (B) is preferably 5% to 95% by mass and more preferably 20% to 90% by mass with respect to the total mass of the curable composition. When the contained amount is within the above-described range, the surface hydrophilicity and transparency of the silicone hydrogel are improved.

A contained amount of the surfactant (C) is preferably 1% to 30% by mass, more preferably 2% to 20% by mass, and still more preferably 3% to 10% by mass with respect to the total mass of the curable composition.

When the contained amount is within the above-described range, moldability and solvent resistance of the silicone hydrogel are improved.

When the contained amount is equal to or more than the above-described lower limit value, the hydrophilicity of the molded silicone hydrogel is sufficient; and when the contained amount is equal to or less than the above-described upper limit value, the silicone hydrogel does not become turbid.

When the surfactant (C) includes the sugar fatty acid ester (C2), a contained amount of the sugar fatty acid ester (C2) is preferably 0.1 % to 30% by mass, more preferably 1% to 25% by mass, and still more preferably 5% to 20% by mass with respect to the total mass of the curable composition.

When the surfactant (C) includes a surfactant other than the sugar fatty acid ester (C2), a contained amount of the surfactant other than the sugar fatty acid ester (C2) is preferably 0.1% to 20% by mass, more preferably 1% to 15% by mass, and still more preferably 3% to 10% by mass with respect to the total mass of the curable composition.

When the surfactant (C) includes the sugar fatty acid ester (C2) and the surfactant having a polyoxyethylene group, the contained amount of the sugar fatty acid ester (C2) and the surfactant having a polyoxyethylene group is preferably 0.1% to 30% by mass, more preferably 1% to 20% by mass, and still more preferably 3% to 10% by mass with respect to the total mass of the curable composition.

When the surfactant (C) includes the nonionic surfactant, a contained amount of the nonionic surfactant is preferably 0.1% to 30% by mass, more preferably 1% to 20% by mass, and still more preferably 3% to 10% by mass with respect to the total mass of the curable composition.

When the surfactant (C) includes two or more kinds of the surfactants (C), a blending amount of the two or more kinds of the surfactants (C) is preferably 2 to 20 parts by mass and more preferably 5 to 10 parts by mass with respect to 100 parts by mass of the above-described monomer components.

When the blending amount of the two or more kinds of the surfactants (C) is equal to or more than the above-described lower limit value, the hydrophilicity of the molded silicone hydrogel is sufficient; and when the blending amount thereof is equal to or less than the above-described upper limit value, the silicone hydrogel does not become turbid.

A contained amount of water is preferably 0% to 10% by mass, more preferably 0% to 5% by mass, and still more preferably 0% to 1% by mass with respect to the total mass of the curable composition.

### <Method for producing curable composition >

The curable composition according to the embodiment of the present invention can be prepared, for example, by putting the respective components in any order or collectively into a stirring (mixing) device, and stirring (mixing) the components at a temperature of 10°C to 50°C until the components are uniform.

### <Method for producing silicone hydrogel>

The method for producing a silicone hydrogel according to the embodiment of the present invention includes the following steps (1) to (3).

### <Step (1)>

The step (1) according to the present invention is a step of preparing a curable composition containing a silicone-based (meth)acrylate (A), a hydrophilic monomer (B), and two or more kinds of surfactants (C).

Each of the components of the silicone-based (meth)acrylate (A), the hydrophilic monomer (B), and the two or more kinds of surfactants (C) is as described above.

The curable composition according to the embodiment of the present invention can be prepared, for example, by putting the respective components in any order or collectively into a stirring (mixing) device, and stirring (mixing) the components at a temperature of 10°C to 50°C until the components are uniform.

### <Step (2)>

The step (2) in the method for producing a silicone hydrogel according to the embodiment of the present invention is a step of molding the above-described curable composition with a hydrophobic mold to obtain a cured product.

The hydrophobic mold is a mold used when the curable composition is filled in the mold to proceed a polymerization reaction, and is a mold having a hydrophobic surface.

The hydrophobic mold is preferably a mold made of polyolefin, and more preferably a mold made of polypropylene.

### <Step of obtaining cured product>

When the curable composition is filled in the hydrophobic mold and the polymerization reaction proceeds, a cured product can be obtained.

The polymerization reaction can be promoted by irradiating the curable composition with active energy rays or heating the curable composition.

When the polymerization reaction proceeds by irradiation with active energy rays, examples of the active energy rays include ultraviolet rays and electron beams.

Examples of an ultraviolet ray source include a high-pressure mercury lamp. The amount of ultraviolet energy is preferably approximately 0.1 to 10 J/cm².

When the polymerization reaction proceeds by heating, the temperature and the heating time are not particularly limited, but the temperature is preferably 60°C to 140°C and the heating time is preferably 0.1 to 24 hours.

The polymerization reaction may be performed in the air, but may also be performed in an inert gas atmosphere such as nitrogen and argon for the purpose of improving the polymerization rate of the monomer.

After the polymerization reaction, the cured product can be taken out in a dried state by deforming the hydrophobic mold.

In addition, the cured product may be immersed in a solvent (for example, water, methanol, ethanol, 1-propanol, 2-propanol, a mixture of these, or a solution of these) together with the hydrophobic mold to swell the cured product and release the cured product from the hydrophobic mold.

Among the above, it is preferable to take out the cured product in a dry state without using the solvent.

### <Step (3)>

The step (3) in the method for producing a silicone hydrogel according to the embodiment of the present invention is a step of washing the above-described cured product.

The obtained cured product may be a mixture with the surfactant (C), the unreacted monomer components (unreacted materials), the residues of the respective components, by-products, and the like. Therefore, the washing is carried out by an operation such as repeatedly replacing the solvent with a new solvent after the solvation.

Examples of the solvent used for the washing include water, methanol, ethanol, 1-propanol, 2-propanol, a mixture of these, and a solution of these.

The washing operation of the step (3) is not particularly limited.

As an example, an operation of washing with water at 90°C five times, which will be described later, may be carried out here as the washing operation of the step (3).

As another example, a method of heating, at 60°C, a solvent obtained by mixing 2-propanol and a phosphate buffer solution in equal amounts in terms of volume ratio, immersing the cured product in the solvent for 10 minutes or longer, and transferring the cured product to a phosphate buffer solution at 60°C and immersing the cured product for 10 minutes or longer can also be mentioned.

The silicone hydrogel is obtained by hydrating the cured product to form a hydrogel.

The hydration is preferably carried out by immersing the cured product in water or physiological saline for 10 minutes or longer at a temperature of 10°C to 90°C.

The hydrated cured product, that is, the silicone hydrogel may be sterilized under high temperature and high pressure. For example, the treatment may be carried out in an autoclave under the conditions of 121°C and 2 atm for 20 minutes.

### <Silicone hydrogel>

The silicone hydrogel according to the embodiment of the present invention contains a cured product of the curable composition according to the embodiment of the present invention, and is a gel obtained by the method for producing a silicone hydrogel according to the embodiment of the present invention, which includes the above-described steps (1) to (3).

A contact angle of the silicone hydrogel according to the embodiment of the present invention after washing with water at 90°C five times is preferably 90° or less, more preferably 80° or less, and still more preferably 70° or less.

The operation of the washing with water at 90°C is not particularly limited, and for example, the silicone hydrogel may be put into a water tank containing water at 90°C, immersed for an optional time, and taken out.

The water in the water tank is replaced with water at 90°C, and the above-described operation is further performed four times.

In this manner, the surfactant (C) and the like contained in the silicone hydrogel can be discharged to the outside.

The contact angle of the silicone hydrogel after the washing with water at 90°C five times is 90° or less. Here, the contact angle of the silicone hydrogel means a contact angle between the silicone hydrogel and a water droplet.

It is preferable that the contact angle of the silicone hydrogel is small, and the lower limit thereof is preferably 0° or more.

The total light transmittance of the silicone hydrogel is preferably 90% or more, more preferably 92% or more, and even more preferably 93% or more.

It is preferable that the total light transmittance is high, and the upper limit thereof may be 100% or less.

In the silicone hydrogel according to the embodiment of the present invention, a haze measured in accordance with JIS K 7136: 2000 "Method for obtaining haze of transparent materials" is preferably 0.1 or more and 7 or less, more preferably 0.1 or more and 6 or less, and still more preferably 0.1 or more and 5 or less. When the haze is equal to or more than the above-described lower limit value, handleability is excellent; and when the haze is equal to or less than the above-described upper limit value, transparency is excellent.

A contained amount of water in the silicone hydrogel according to the embodiment of the present invention is preferably 10% to 80% by mass, more preferably 20% to 75% by mass, and still more preferably 30% to 70% by mass with respect to the total mass of the silicone hydrogel.

### <Mechanism of action>

In the method for producing a silicone hydrogel according to the embodiment of the present invention, by using the curable composition according to the embodiment of the present invention, which contains the silicone-based (meth)acrylate (A), the hydrophilic monomer (B), and the surfactant (C), the surfactant (C) hydrophilizes the surface (inner wall surface) of the hydrophobic mold in a pseudo manner, and the hydrophilic monomer (B) is unevenly distributed on the surface of the silicone hydrogel, so that a silicone hydrogel having high surface hydrophilicity can be produced even after the surfactant (C) is discharged in the washing step.

This means that the surface hydrophilicity is not reduced due to friction or washing in an actual use case of the silicone hydrogel.

From the above gist, the silicone hydrogel according to the embodiment of the present invention is characterized in that no surface treatment for hydrophilization, such as plasma treatment, in the related art is performed.

### <Contact lens>

The silicone hydrogel according to the embodiment of the present invention has excellent surface hydrophilicity and transparency.

Therefore, the silicone hydrogel according to the embodiment of the present invention is particularly useful as a device for an eye, such as a contact lens, an intraocular lens, and an artificial cornea.

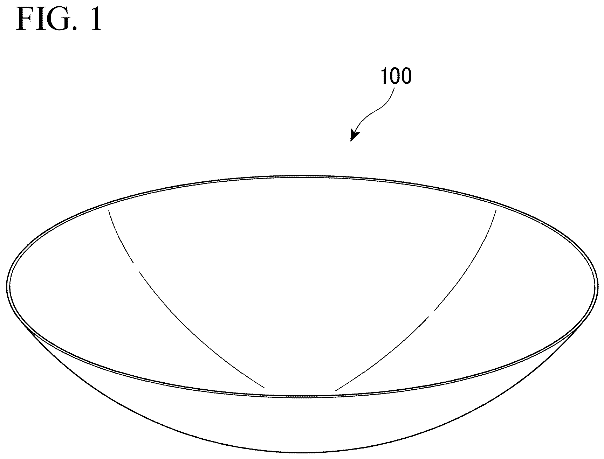

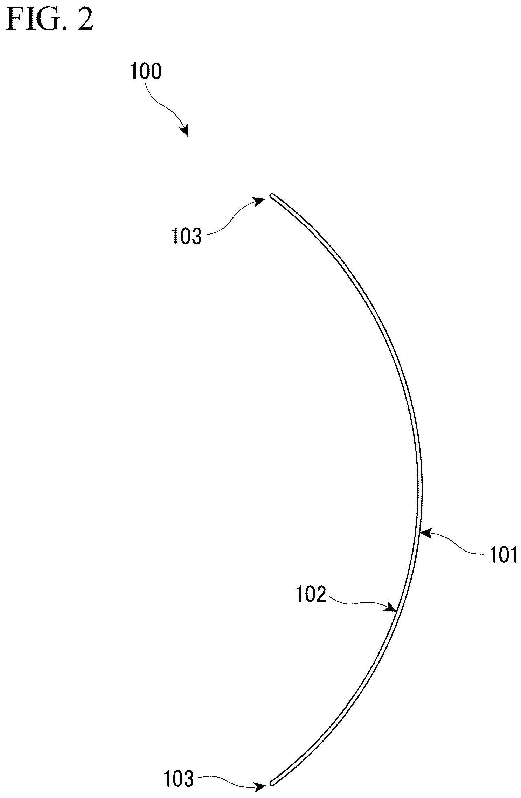

FIG. 1 is a perspective view showing an example of a contact lens using the silicone hydrogel according to the embodiment of the present invention. FIG. 2 is a cross-sectional view showing the example of the contact lens using the silicone hydrogel according to the embodiment of the present invention. In FIG. 2, 101 is a convex portion, 102 is a concave portion, and 103 is a peripheral portion.

When used as the contact lens, a film thickness of the silicone hydrogel is preferably 0.01 to 4 mm, more preferably 0.01 to 3 mm, still more preferably 0.02 to 2 mm, and particularly preferably 0.03 to 1 mm.

### Examples

Hereinafter, the present invention will be described in more detail with reference to Examples. However, the present invention is not limited to the examples described below.

In the following description, "part" and "%" indicate "part by mass" and "% by mass".

### [Evaluation method]

### (1) Film thickness

The silicone hydrogel was measured in a plane at three unspecified points with a dial gauge of 1/1000 mm. An average value thereof was defined as a film thickness of the silicone hydrogel.

### (2) Contact angle

Using a contact angle meter ("DropMaster 500" manufactured by Kyowa Interface Science Co., Ltd.), 2 µg of pure water was added dropwise to the silicone hydrogel from which moisture on the surface had been sufficiently wiped off, and a contact angle after 10 seconds was measured.

The measurement was performed at room temperature (25°C), and the measurement surface of the silicone hydrogel was a surface which was in contact with a polypropylene mold during curing.

### (3) Transparency

Using a haze meter NDH-7000II (manufactured by NIPPON DENSHOKU INDUSTRIES Co., Ltd.), the total light transmittance of the silicone hydrogel was measured based on JIS K 7136 (2000).

The total light transmittance of a silicone hydrogel sample having a film thickness of 0.8 mm was measured, and the transparency was evaluated as follows.
A: total light transmittance was 93% or more.
B: total light transmittance was less than 93%.

### (4) Moisture content

The silicone hydrogel was sufficiently allowed to stand in water at 25°C to swell, taken out, and the surface moisture was wiped off, and a mass of the gel was measured to obtain the wet mass. The silicone hydrogel for which the wet mass was measured was dried at 90°C overnight, and immediately after being taken out, and a mass thereof was measured to obtain a dry mass. A moisture content was calculated by dividing the difference between the wet mass and the dry mass by the wet mass.

### [Surfactant]

(C-1): Polyoxyethylene-polyoxypropylene ternary block copolymer ("Pluronic (registered trademark) P-85" manufactured by ADEKA CORPORATION; HLB value: 10 (calculated value by Griffin method))
(C-2): Polyoxyethylene phytosterol ("NIKKOL (registered trademark) BPS-30" manufactured by Nikko Chemicals Co.,Ltd.; HLB value: 18)
(C-3): Polyoxyethylene hydrogenated castor oil ("NIKKOL (registered trademark) HCO-60" manufactured by Nikko Chemicals Co.,Ltd.; HLB value: 14)
(C-4): Polyoxyethylene-lauryl ether-sodium sulfate ester ("NISSANTRAX (registered trademark) K-40" manufactured by NOF Corporation; HLB value: 13 (calculated value by Griffin method))

### [Monomer mixture]

As the silicone-based (meth)acrylate (A), a compound (A1) and a compound (A2) were used in combination.

A silicone macromonomer ("MFR-M15" manufactured by Gelest, Inc.) was used as the compound (A1); and a siloxanyl acrylate ("BX-SiGMMA" manufactured by Bimax (methyl di(trimethylsiloxy)silylpropyl glyceryl methacrylate) was used as the compound (A2).

N,N-dimethylacrylamide was used as the hydrophilic monomer (B), ethylene glycol dimethacrylate was used as the crosslinking agent (D), and 2-hydroxy-2-methylpropiophenone was used as the polymerization initiator (E); and these components were stirred at room temperature to obtain a monomer mixture.

1 part of the polymerization initiator (E) was used with respect to 100 parts of the total of the components (A), (B), and (D).

### [Example 1A]

The surfactant (C-1) was used as the surfactant (C), added to the above-described monomer mixture according to the formulation shown in Table 1, and stirred at room temperature to obtain a curable composition.

The surfactant (C-1) was uniformly mixed, and a colorless and transparent liquid curable composition was obtained.

**[Table 1A]**

| | | Example 1A | Example 2A | Example 3A | Example 4A | Example 5A | Example 6A | Comparative Example 1A | Comparative Example 2A | Comparative Example 3A |
|---|---|---|---|---|---|---|---|---|---|---|
| Monomer mixture [part] | Compound (A1) | 5.8 | 5.8 | 5.8 | 5.8 | 5.4 | 9.7 | 6.0 | 10.0 | 6.0 |
| | Compound (A2) | 8.7 | 8.7 | 8.7 | 8.7 | 8.1 | 19.4 | 9.0 | 20.0 | 9.0 |
| | Hydrophilic monomer (B) | 80.6 | 80.6 | 80.6 | 80.6 | 74.7 | 66.0 | 83.0 | 68.0 | 82.5 |
| | Crosslinking agent (D) | 1.9 | 1.9 | 1.9 | 1.9 | 1.8 | 1.9 | 2.0 | 2.0 | 2.0 |
| Surfactant [part] | (C1-1) | 3.0 | - | - | - | - | - | - | - | - |
| | (C1-2) | - | 3.0 | - | - | - | - | - | - | - |
| | (C1-3) | - | - | 3.0 | - | 10 | 3 | - | - | - |
| | (C1-4) | - | - | - | 3.0 | - | - | - | - | 0.5 |
| Contact angle [degree] | | 75 | 75 | 68 | 70 | 65 | 74 | 95 | 92 | 92 |
| Transparency | | A | A | A | A | A | A | A | A | A |

The obtained curable composition was poured into a mold made of general-purpose polypropylene, covered with a transparent release PET film, and irradiated multiple times with an UV irradiator (manufactured by Ushio Inc., UVC-501/10S4A) such that the cumulative irradiation amount was 2.7 J/cm², thereby obtaining a cured product.

In Example 1A, the mold made of general-purpose polypropylene was used as a hydrophobic mold.

Next, the obtained cured product was taken out from the hydrophobic mold. The hydrophobic mold was taken out in a dry state without using a solvent.

The taken cured product was immersed in water to be sufficiently swollen, thereby obtaining a silicone hydrogel.

In order to discharge the surfactant (C) and the like contained in the silicone hydrogel to the outside, the silicone hydrogel was immersed in distilled water at 90°C for 30 minutes in an amount at least 1,000 times a dry weight of the silicone hydrogel to be washed.

The distilled water was exchanged, and this washing operation was carried out five times.

Using the obtained silicone hydrogel, the film thickness, the contact angle, and the transparency were evaluated.

The film thickness was 0.8 mm. The evaluation results of the contact angle and the transparency are shown in Table 1.

### [Example 2A]

A silicone hydrogel was obtained in the same manner as in Example 1A, except that the surfactant (C-2) was used as the surfactant (C) and added according to the formulation shown in Table 1.

The film thickness was 0.8 mm. The evaluation results of the contact angle and the transparency are shown in Table 1.

### [Example 3A]

A silicone hydrogel was obtained in the same manner as in Example 1A, except that the surfactant (C-3) was used as the surfactant (C) and added according to the formulation shown in Table 1.

The film thickness was 0.8 mm. The evaluation results of the contact angle and the transparency are shown in Table 1A.

### [Example 4A]

A silicone hydrogel was obtained in the same manner as in Example 1A, except that the surfactant (C-4) was used as the surfactant (C) and added according to the formulation shown in Table 1A.

The film thickness was 0.8 mm. The evaluation results of the contact angle and the transparency are shown in Table 1A.

### [Example 5A]

A silicone hydrogel was obtained in the same manner as in Example 1A, except that the surfactant (C-3) was used as the surfactant (C) and added according to the formulation shown in Table 1A.

The film thickness was 0.8 mm. The evaluation results of the contact angle and the transparency are shown in Table 1.

### [Example 6A]

A silicone hydrogel was obtained in the same manner as in Example 1A, except that the surfactant (C-3) was used as the surfactant (C) and a monomer mixture having a large amount of the silicone-based (meth)acrylate (A) was prepared as shown in Table 1A.

The film thickness was 0.8 mm. The evaluation results of the contact angle and the transparency are shown in Table 1A.

### [Comparative Example 1A]

A silicone hydrogel was obtained in the same manner as in Example 1A, except that the surfactant (C) was not used.

The film thickness was 0.8 mm. The evaluation results of the contact angle and the transparency are shown in Table 1A.

### [Comparative Example 2A]

A silicone hydrogel was obtained in the same manner as in Example 1A, except that the surfactant (C) was not used and a monomer mixture having a large amount of the silicone-based (meth)acrylate (A) was prepared as shown in Table 1A.

The film thickness was 0.8 mm. The evaluation results of the contact angle and the transparency are shown in Table 1A.

### [Comparative Example 3A]

A silicone hydrogel was obtained in the same manner as in Example 1A, except that the surfactant (C-4) was used as the surfactant (C) and added according to the formulation shown in Table 1A.

The film thickness was 0.8 mm. The evaluation results of the contact angle and the transparency are shown in Table 1A.

As shown in Table 1A, it was found that the silicone hydrogels of Examples 1A to 6A had a contact angle of 90° or less after the washing with water at 90°C five times, and the surface hydrophilicity was maintained even after being sufficiently washed with water. The silicone hydrogels of Examples 1A to 6A had a high total light transmittance and favorable transparency.

On the other hand, it was found that the silicone hydrogels of Comparative Examples 1A to 3A had favorable transparency, but the surface hydrophilicity after being sufficiently washed with water was insufficient.

### [Monomer]

Siloxanyl acrylate (SIGMA, "BX-SiGMMA" manufactured by Bimax Co., Ltd.) and 3-[tris(trimethylsiloxy)silyl]propyl (TRIS, "SIM6487.6" manufactured by Gelest, Inc.), and α-butyl-ω-(3-methacryloxypropyl)polydimethylsiloxane (Silaplane (registered trademark) FM-0711, manufactured by JNC Corporation) were used as the silicone-based (meth)acrylate (A).

N,N-dimethylacrylamide (DMA, manufactured by Tokyo Chemical Industry Co., Ltd.), hydroxyethyl methacrylate (HEMA, manufactured by Tokyo Chemical Industry Co., Ltd.), and N-vinyl-2-pyrrolidone (NVP, manufactured by Tokyo Chemical Industry Co., Ltd.) were used as the hydrophilic monomer (B).

As other monomers, 2-methoxyethyl acrylate (2-MTA, manufactured by Tokyo Chemical Industry Co., Ltd.) was used.

### [Surfactant]

Sucrose palmitate (RYOTO (registered trademark) Sugar Ester, P-1570, manufactured by Mitsubishi Chemical Corporation, HLB value: 15), polyoxyethylene oleyl ether ("NONION (registered trademark) E-215" manufactured by NOF Corporation, HLB value: 14.4), and polyoxyethylene hydrogenated castor oil ("NIKKOL (registered trademark) HCO-60" manufactured by Nikko Chemicals Co.,Ltd.) were used as the surfactant (C).

Ethylene glycol dimethacrylate (EDMA, manufactured by Tokyo Chemical Industry Co., Ltd.) was used as the crosslinking agent (D); 2,2'-azobis(isobutyronitrile) (AIBN, manufactured by Tokyo Chemical Industry Co., Ltd.) was used as the polymerization initiator (E); and these were stirred at room temperature to obtain a monomer mixture.

1 part of the polymerization initiator (E) was used with respect to 100 parts of the total of the components (A), (B), and (D).

### [Comparative Example 4A]

The above-described components (A), (B), and (D) of the monomer mixture were blended according to the formulation shown in Table 2A such that the total amount thereof was 100 parts, 1 part of the polymerization initiator (E) was added thereto, and the mixture was stirred at room temperature to obtain a curable composition.

### [Comparative Examples 5A to 7A, Comparative Examples 9A and 10A, and Reference Example 1A]

The above-described components (A), (B), and (D) of the monomer mixture were blended according to the formulation shown in Table 2A or Table 3A such that the total amount thereof was 100 parts, 1 part of the polymerization initiator (E) was added thereto, and the mixture was stirred at room temperature to obtain a curable composition.

### [Example 7A]

The above-described components (A), (B), (C), and (D) of the monomer mixture were blended according to the formulation shown in Table 2A such that the total amount thereof was 100 parts, 1 part of the polymerization initiator (E) was added thereto, and the mixture was stirred at room temperature to obtain a curable composition.

### [Examples 8A to 17A]

The above-described components (A), (B), (C), and (D) of the monomer mixture were blended according to the formulation shown in Table 2 such that the total amount thereof was 100 parts, 1 part of the polymerization initiator (E) was added thereto, and the mixture was stirred at room temperature to obtain a curable composition.

**[Table 2A]**

| | Example 7A | Example 8A | Example 9A | Example 10A | Example 11A | Example 12A | Comparative Example 4A | Comparative Example 5A | Comparative Example 6A | Comparative Example 7A | Comparative Example 8A | Reference Example 1A |
|---|---|---|---|---|---|---|---|---|---|---|---|---|
| HEMA | 38 | 37 | 38 | 39 | 37 | | 40 | 40 | | | | 50 |
| NVP | 36 | 35 | 25 | 25 | 24 | 18 | 38 | 26 | 20 | 39 | 37 | 48 |
| DMA | | | | | | | | | | | | |
| 2-MTA | | | | | | 54 | | | 58 | 39 | 37 | |
| TRIS | 19 | 19 | | | | 18 | 20 | | 20 | 20 | 19 | |
| SIGMA | | | 27 | 27 | 26 | | | 28 | | | | |
| FM-0711 | | | 4 | 4 | 4 | | | 4 | | | | |
| P-1570 | 5 | 5 | 5 | | 5 | 5 | | | | | | |
| E-215 | | 3 | | 3 | 3 | 3 | | | | | | |
| HCO-60 | | | | | | | | | | | 5 | |
| EDMA | 2 | 2 | 2 | 2 | 2 | 2 | 2 | 2 | 2 | 2 | 2 | 2 |
| AIBN | 1 | 1 | 1 | 1 | 1 | 1 | 1 | 1 | 1 | 1 | 1 | 1 |
| Haze | 2.9 | 1.4 | 1.7 | 3.0 | 2.6 | 3.7 | 11.3 | 7.9 | 3.1 | 2.4 | 3.8 | 1.7 |
| Transparency | A | A | A | A | A | A | B | B | A | A | A | A |
| Moisture content [%] | 43 | 43 | 34 | 33 | 36 | 49 | 43 | 35 | 47 | 47 | 47 | 57 |
| Contact angle [°] | 63.2 | 40.8 | 62.3 | 76.3 | 56.8 | 79.6 | 95.7 | 84.2 | 99.5 | 96.0 | 91.3 | 43.2 |

The obtained curable composition was poured into a mold made of general-purpose polypropylene, and heat-cured in an oven at 90°C for 4 hours to obtain a cured product.

Next, the obtained cured product was taken out from the hydrophobic mold. The hydrophobic mold was taken out in a dry state without using a solvent.

As a washing solvent, isopropyl alcohol and a phosphate buffer solution were mixed at a volume ratio of 1:1.

In order to discharge unpolymerized monomers, the surfactant (C), and the like contained in the silicone hydrogel to the outside, the taken cured product was immersed in the above-described washing solvent to be sufficiently swollen, and immersed at 60°C for 1 hour. Furthermore, the cured product was taken out from the washing solvent, and newly immersed in a phosphate buffer solution at 60°C for 1 hour. Finally, the cured product was taken out from the washing solvent, and newly immersed in a phosphate buffer solution to obtain a silicone hydrogel.

Using the obtained silicone hydrogel, the film thickness, the moisture content, the contact angle, and the transparency were evaluated.

The film thickness was 0.2 mm. The evaluation results of the contact angle, the moisture content, and the transparency are shown in Table 2A.

**[Table 3A]**

| | Example 13A | Example 14A | Example 15A | Example 16A | Example 17A | Comparative Example 9A | Comparative Example 10A |
|---|---|---|---|---|---|---|---|
| HEMA | | | | | | | |
| NVP | | | | | | | |
| DMA | 55 | 56 | 54 | 55 | 54 | 58 | 58 |
| 2-MTA | | | | | | | |
| TRIS | 38 | 39 | 37 | | | 40 | |
| SIGMA | | | | 34 | 33 | | 36 |
| FM-0711 | | | | 4 | 4 | | 4 |
| P-1570 | 5 | | 5 | 5 | 5 | | |
| E-215 | | 3 | 3 | | 3 | | |
| EDMA | 2 | 2 | 2 | 2 | 2 | 2 | 2 |
| AIBN | 1 | 1 | 1 | 1 | 1 | 1 | 1 |
| Haze | 2.9 | 1.4 | 1.7 | 3.0 | 2.6 | 3.7 | 11.3 |
| Transparency | A | A | A | A | A | A | B |
| Moisture content [%] | 43 | 43 | 34 | 33 | 36 | 49 | 43 |
| Contact angle [°] | 63.2 | 40.8 | 62.3 | 76.3 | 56.8 | 79.6 | 95.7 |

As shown in Table 2A, it was found that the silicone hydrogels of Examples 7A to 11A had a contact angle of 80 degrees or less after the washing, and the surface hydrophilicity was maintained even after being sufficiently washed.

On the other hand, it was found that the silicone hydrogels of Comparative Examples 4A to 8A had insufficient surface hydrophilicity after the washing.

Although the gel of Reference Example 1A was transparent and had high surface hydrophilicity, it was found that the transparency and the surface hydrophilicity of the gel were deteriorated in Comparative Examples 4A and 5A, and the transparency and the surface hydrophilicity of the gel were deteriorated by blending the silicone monomer. However, in Examples 7A and 8A, the transparency and the surface hydrophilicity were improved even though the monomer formulation was the same as that of Comparative Example 4A and the moisture content of the gel was the same extent. Similarly, in Examples 9A to 11A, the transparency and the surface hydrophilicity were improved even though the monomer formulation was the same as that of Comparative Example 5A and the moisture content of the gel was the same extent. Comparative Example 8A had the same monomer formulation as Comparative Example 7A, and the hydrophilicity was improved but not sufficient. It is shown that the NVP had a certain effect as the hydrophilic monomer (B), but the effect was inferior. Even in that case, as shown in Example 12A, it was found that the effect of improving the hydrophilicity could be enhanced by using two kinds of the surfactants, but the effect was inferior to that in Example 8A. From these results, the usefulness of blending the surfactant in improving the transparency and the surface hydrophilicity could be confirmed.

As shown in Table 3A, it was found that the silicone hydrogels of Examples 13A to 17A had a contact angle of 78 degrees or less after the washing, and the surface hydrophilicity was maintained even after being sufficiently washed.

On the other hand, it was found that the silicone hydrogels of Comparative Examples 9A and 10A had insufficient surface hydrophilicity after the washing.

In Examples 13A to 15A, the surface hydrophilicity was improved even though the monomer formulation was the same as that of Comparative Example 9A and the moisture content of the gel was the same extent. Similarly, in Examples 16A and 17A, the surface hydrophilicity was improved even though the monomer formulation was the same as that of Comparative Example 10A and the moisture content of the gel was the same extent. From these results, the usefulness of blending the surfactant in improving the surface hydrophilicity could be confirmed.

### [Evaluation method]

The measurements were performed and evaluated in the same manner as in the method of (1) to (3) described above.

### [Surfactant]

(C1-1): Polyoxyethylene oleyl ether ("NONION (registered trademark) E-230" manufactured by NOF Corporation, HLB value: 16.6)
(C2-1): Sucrose fatty acid ester ("RYOTO Sugar Ester L-1695" manufactured by Mitsubishi Chemical Corporation, HLB value: 16, lauric acid)
(C2-2): Sucrose fatty acid ester ("RYOTO Sugar Ester M-1695" manufactured by Mitsubishi Chemical Corporation, HLB value: 16, myristic acid)
(C2-3): Sucrose fatty acid ester ("RYOTO Sugar Ester P-1670" manufactured by Mitsubishi Chemical Corporation, HLB value: 16, palmitic acid)
(C2-4): Sucrose fatty acid ester ("RYOTO Sugar Ester P-1570" manufactured by Mitsubishi Chemical Corporation, HLB value: 15, palmitic acid)
(C2-5): Sucrose fatty acid ester ("RYOTO Sugar Ester S-1670" manufactured by Mitsubishi Chemical Corporation, HLB value: 16, stearic acid)
(C2-6): Sucrose fatty acid ester ("RYOTO Sugar Ester S-570" manufactured by Mitsubishi Chemical Corporation, HLB value: 5, stearic acid)

### [Monomer mixture]

As the silicone-based (meth)acrylate (A), a compound (A1) and a compound (A2) were used in combination.

A silicone macromonomer ("MFR-M15" manufactured by Gelest, Inc.) was used as the compound (A1); and a siloxanyl acrylate ("BX-SiGMMA" manufactured by Bimax (methyl di(trimethylsiloxy)silylpropyl glyceryl methacrylate) was used as the compound (A2).

N,N-dimethylacrylamide was used as the hydrophilic monomer (B), polyethylene glycol (PEG200) dimethacrylate was used as the crosslinking agent (D), and Darocur 1173 was used as the polymerization initiator (E); and these components were stirred at room temperature to obtain a monomer mixture.

1 part of the polymerization initiator (E) was used with respect to 100 parts of the total of the components (A), (B), and (D).

### [Example 1B]

As two or more kinds of the surfactants (C), the surfactant (C1) and the surfactant (C2-1) were used, and the above-described components (A), (B), and (D) of the monomer mixture were blended according to the formulation shown in Table 1B such that the total amount thereof was 100 parts, and stirred at room temperature to obtain a curable composition.

The surfactants (C1) and (C2-1) were uniformly mixed with each other to obtain a colorless and transparent liquid curable composition.

**[Table 1B]**

| | | Example 1B | Example 2B | Example 3B | Example 4B | Example 5B | Example 6B | Example 7B | Example 8B | Example 9B | Example 10B | Comparative Example 1B |
|---|---|---|---|---|---|---|---|---|---|---|---|---|
| Monomer mixture [part] | Compound (A1) | 6 | 6 | 6 | 6 | 6 | 6 | 6 | 6 | 6 | 6 | 6 |
| | Compound (A2) | 9 | 9 | 9 | 9 | 9 | 9 | 9 | 9 | 9 | 9 | 9 |
| | Hydrophilic monomer (B) | 83 | 83 | 83 | 83 | 83 | 83 | 83 | 83 | 83 | 83 | 83 |
| | Crosslinking agent (D) | 2 | 2 | 2 | 2 | 2 | 2 | 2 | 2 | 2 | 2 | 2 |
| Surfactant [part] | (C1-1) | 3 | 3 | 3 | 3 | 3 | 3 | | 3 | | | |
| | (C2-1) | 5 | | | | | | | | | | |
| | (C2-2) | | 5 | | | | | | | | | |
| | (C2-3) | | | 5 | | | | 4 | | | | |
| | (C2-4) | | | | 5 | | | 4 | | | | |
| | (C2-5) | | | | | 5 | | | | 5 | 8 | |
| | (C2-6) | | | | | | 5 | | | | | |
| Contact angle [degree] | | 33 | 44 | 39 | 38 | 53 | 47 | 62 | 70 | 69 | 67 | 72 |
| Transparency | | A | A | A | A | A | A | A | A | A | A | A |

Using a mold made of general-purpose polypropylene, the obtained curable composition was irradiated multiple times with an UV irradiator (manufactured by Ushio Inc., UVC-501/10S4A) such that the cumulative irradiation amount was 2.7 J/cm², thereby obtaining a cured product.

Next, the obtained cured product was taken out from the hydrophobic mold. The hydrophobic mold was taken out in a dry state without using a solvent.

The taken cured product was immersed in water to be sufficiently swollen, thereby obtaining a silicone hydrogel.

In order to discharge the two or more kinds of the surfactants (C), and the like contained in the silicone hydrogel to the outside, the silicone hydrogel was immersed in distilled water at 90°C for 30 minutes in an amount at least 1,000 times a dry weight of the silicone hydrogel to be washed.

The distilled water was exchanged, and this washing operation was carried out five times.

Using the obtained silicone hydrogel, the film thickness, the contact angle, and the transparency were evaluated.

The film thickness was 0.6 mm. The evaluation results of the contact angle and the transparency are shown in Table 1B.

### [Examples 2B to 10B and Comparative Example 1B]

A silicone hydrogel was obtained in the same manner as in Example 1B, except that the types and amounts of surfactants as the two or more kinds of the surfactants (C) were as shown in Table 1.

The film thickness was 0.6 mm. The evaluation results of the contact angle and the transparency are shown in Table 1B.

### [Example 11B]

A silicone hydrogel was obtained in the same manner as in Example 1B, except that a monomer mixture having a large amount of the silicone-based (meth)acrylate (A) was prepared as shown in Table 2.

The film thickness was 0.6 mm. The evaluation results of the contact angle and the transparency are shown in Table 2B.

**[Table 2B]**

| | | Example 11B | Example 12B | Example 13B | Example 14B | Example 15B | Example 16B | Comparative Example 2B |
|---|---|---|---|---|---|---|---|---|
| Monomer mixture [part] | Compound (A1) | 10 | 10 | 10 | 10 | 10 | 10 | 10 |
| | Compound (A2) | 20 | 20 | 20 | 20 | 20 | 20 | 20 |
| | Hydrophilic monomer (B) | 68 | 68 | 68 | 68 | 68 | 68 | 68 |
| | Crosslinking agent (D) | 2 | 2 | 2 | 2 | 2 | 2 | 2 |
| Surfactant [part] | (C1-1) | 3 | 3 | 3 | 3 | 3 | | 1 |
| | (C2-1) | 5 | | | | | | |
| | (C2-2) | | 5 | | | | | |
| | (C2-3) | | | 5 | | | | |
| | (C2-5) | | | | 5 | | 5 | |
| Contact angle [degree] | | 57 | 71 | 70 | 73 | 78 | 89 | 90 |
| Transparency | | A | A | A | A | A | A | A |

### [Examples 12B to 16B and Comparative Example 2B]

A silicone hydrogel was obtained in the same manner as in Example 11B, except that the types and amounts of surfactants as the two or more kinds of the surfactants (C) were as shown in Table 2B.

The film thickness was 0.6 mm. The evaluation results of the contact angle and the transparency are shown in Table 2B.

As shown in Table 1B, it was found that the silicone hydrogels of Examples 1B to 7B had a contact angle of 65 degrees or less, which is a standard for favorable contact angle, after the washing with water at 90°C five times, and the surface hydrophilicity was maintained even after being sufficiently washed with water. In particular, in Examples 1B to 6B, it was found that, by using a combination of the sugar-based surfactant and the surfactant other than the sugar-based surfactant, the contact angle after the washing with water at 90°C five times was 55 degrees or less, which is a standard for favorable contact angle, and the surface hydrophilicity was maintained even after being sufficiently washed with water.

The silicone hydrogels of Examples 1B to 7B had a high total light transmittance and favorable transparency.

On the other hand, it was found that the silicone hydrogels of Examples 8B to 10B and Comparative Example 1B had favorable transparency, but the surface hydrophilicity after being sufficiently washed with water was insufficient, so that the usefulness of using two or more kinds of the surfactants (C) could be confirmed.

As shown in Table 2, it was found that the silicone hydrogels of Examples 11B to 14B had a contact angle of 75 degrees or less after the washing with water at 90°C five times, and the surface hydrophilicity was maintained even after being sufficiently washed with water. In particular, in Example 11B, it was confirmed that, even when the contained amount of silicone was high, the requirement of a contact angle of 65 degrees or less, which is a standard for favorable contact angle, was satisfied, and as the carbon chain of the sugar fatty acid ester was shorter, the effect was exhibited more. In addition, the silicone hydrogels of Examples 11B to 14B had a high total light transmittance and favorable transparency.

On the other hand, it was found that the silicone hydrogels of Examples 15B and 16B and Comparative Example 2B had favorable transparency, but the surface hydrophilicity after being sufficiently washed with water was insufficient. Therefore, even when the contained amount of silicone was high, the usefulness of using two or more kinds of the surfactants (C) in improving wettability could be confirmed.

### INDUSTRIAL APPLICABILITY

According to the method for producing a silicone hydrogel of the present invention, even when a hydrophobic mold such as polypropylene is used, a silicone hydrogel having excellent surface hydrophilicity and transparency, which are stable for a long period of time, can be obtained without performing a surface treatment such as a plasma treatment.

According to the method for producing a contact lens of the present invention, a contact lens having excellent surface hydrophilicity and transparency, which are stable for a long period of time, can be obtained.

According to the curable composition of the present invention, a silicone hydrogel having excellent surface hydrophilicity and transparency, which are stable for a long period of time, can be obtained.

The silicone hydrogel according to the present invention has excellent surface hydrophilicity and transparency, and thus is particularly useful as a device for an eye, such as a contact lens, an intraocular lens, and an artificial cornea.

According to the curable composition of the present invention, a silicone hydrogel having excellent surface hydrophilicity and transparency, which are stable for a long period of time, can be provided.

According to the method for producing a silicone hydrogel of the present invention, even when a hydrophobic mold such as polypropylene is used, a silicone hydrogel having excellent surface hydrophilicity and transparency, which are stable for a long period of time, can be obtained without performing a surface treatment such as a plasma treatment.

According to the method for producing a contact lens of the present invention, a contact lens having excellent surface hydrophilicity and transparency, which are stable for a long period of time, can be obtained.

### REFERENCE SIGNS LIST

- 100: Contact lens
- 101: Convex portion
- 102: Concave portion
- 103: Peripheral portion

## Claims

1. A method for producing a silicone hydrogel, comprising the following steps (1) to (3):
a step (1): a step of preparing a curable composition containing a silicone-based (meth)acrylate (A), a hydrophilic monomer (B), and a surfactant (C);
a step (2): a step of molding the curable composition with a hydrophobic mold to obtain a cured product; and
a step (3): a step of washing the cured product.

2. The method for producing a silicone hydrogel according to Claim 1,
wherein the silicone-based (meth)acrylate (A) is a monomer having a siloxanyl group in a molecule.

3. The method for producing a silicone hydrogel according to Claim 1,
wherein the hydrophilic monomer (B) is at least one selected from monomers having, in a molecule, one or more groups selected from a hydroxyl group, an amino group, a carboxyl group, an ionic group, a pyrrolidone group, an amide structure, and a polyalkylene oxide group.

4. The method for producing a silicone hydrogel according to Claim 1,
wherein the hydrophilic monomer (B) is at least one selected from monomers having, in a molecule, one or more groups selected from a hydroxyl group, an amino group, a carboxyl group, an ionic group, a pyrrolidone group, an amide structure (excluding an amide structure with a ring structure having a nitrogen element as a part of the ring structure), and a polyalkylene oxide group.

5. The method for producing a silicone hydrogel according to Claim 1,
wherein the surfactant (C) has an HLB value of 3 to 19.

6. The method for producing a silicone hydrogel according to Claim 1,
wherein the surfactant (C) is a non-polymerizable surfactant.

7. The method for producing a silicone hydrogel according to Claim 1,
wherein the surfactant (C) is a surfactant having a polyoxyethylene group or a sugar-based surfactant.

8. The method for producing a silicone hydrogel according to Claim 1,
wherein a contained amount of water in the curable composition is 0% by mass or more and 10% by mass or less with respect to a total mass of the curable composition.

9. The method for producing a silicone hydrogel according to Claim 1,
wherein a contained amount of the surfactant (C) in the curable composition is 1% by mass or more with respect to a total mass of the curable composition.

10. The method for producing a silicone hydrogel according to Claim 1,
wherein the hydrophobic mold is a mold made of polyolefin.

11. The method for producing a silicone hydrogel according to Claim 1,
wherein the silicone hydrogel is not subjected to a plasma treatment.

12. A method for producing a contact lens using the method for producing a silicone hydrogel according to any one of Claims 1 to 11.

13. A curable composition comprising:
a silicone-based (meth)acrylate (A);
a hydrophilic monomer (B); and
a surfactant (C).

14. The curable composition according to Claim 13,
wherein the silicone-based (meth)acrylate (A) is a monomer having a siloxanyl group in a molecule.

15. The curable composition according to Claim 13,
wherein the hydrophilic monomer (B) is at least one selected from monomers having, in a molecule, one or more groups selected from a hydroxyl group, an amino group, a carboxyl group, an ionic group, a pyrrolidone group, an amide structure, and a polyalkylene oxide group.

16. The curable composition according to Claim 13,
wherein the hydrophilic monomer (B) is at least one selected from monomers having, in a molecule, one or more groups selected from a hydroxyl group, an amino group, a carboxyl group, an ionic group, a pyrrolidone group, an amide structure (excluding an amide structure with a ring structure having a nitrogen element as a part of the ring structure), and a polyalkylene oxide group.

17. The curable composition according to Claim 13,
wherein the surfactant (C) has an HLB value of 3 to 19.

18. The curable composition according to Claim 13,
wherein the surfactant (C) is a non-polymerizable surfactant.

19. The curable composition according to Claim 13,
wherein the surfactant (C) is a surfactant having a polyoxyethylene group or a sugar-based surfactant.

20. The curable composition according to Claim 13,
wherein a contained amount of water in the curable composition is 0% by mass or more and 10% by mass or less with respect to a total mass of the curable composition.

21. The curable composition according to Claim 13,
wherein a contained amount of the surfactant (C) in the curable composition is 1% by mass or more with respect to a total mass of the curable composition.

22. The curable composition according to Claim 13,
wherein two or more kinds of surfactants are contained as the surfactant (C).

23. The curable composition according to Claim 22,
wherein at least one of the two or more kinds of the surfactants (C) is a sugar fatty acid ester (C2), and the other is a surfactant other than the sugar fatty acid ester (C2).

24. The curable composition according to Claim 23,
wherein the surfactant other than the sugar fatty acid ester (C2) is a surfactant having a polyoxyethylene group.

25. The curable composition according to Claim 24,
wherein the surfactant having a polyoxyethylene group is any one of polyoxyethylene hydrogenated castor oils, polyoxyethylene castor oil, polyoxyethylene glycerin fatty acid ester, or polyoxyethylene alkylene ether.

26. A silicone hydrogel which is a cured product of the curable composition according to any one of Claims 13 to 25.

27. The silicone hydrogel according to Claim 26,
wherein a haze measured in accordance with JIS K 7136: 2000 is 0.1 or more and 7 or less.

28. The curable composition according to any one of Claims 13 to 25,
wherein a haze of a silicone hydrogel obtained by curing the curable composition is 0.1 or more and 7 or less, the haze being measured in accordance with JIS K 7136:2000.

29. A curable composition comprising:
a silicone-based (meth)acrylate (A);
a hydrophilic monomer (B); and
two or more kinds of surfactants (C).

30. The curable composition according to Claim 29,
wherein at least one of the two or more kinds of the surfactants (C) is a sugar fatty acid ester (C2).

31. The curable composition according to Claim 30,
wherein the sugar fatty acid ester (C2) has an HLB value of 5 or more.

32. The curable composition according to Claim 30,
wherein the sugar fatty acid ester (C2) is a disaccharide fatty acid ester.

33. The curable composition according to Claim 29,
wherein at least one of the two or more kinds of the surfactants (C) is a sugar fatty acid ester (C2), and the other is a surfactant other than the sugar fatty acid ester (C2).

34. The curable composition according to Claim 33,
wherein the surfactant other than the sugar fatty acid ester (C2) is a surfactant having a polyoxyethylene group.

35. The curable composition according to Claim 34,
wherein the surfactant having a polyoxyethylene group is any one of polyoxyethylene hydrogenated castor oils, polyoxyethylene castor oil, polyoxyethylene glycerin fatty acid ester, or polyoxyethylene alkylene ether.

36. The curable composition according to Claim 29,
wherein the curable composition is for a silicone hydrogel.

37. The curable composition according to Claim 29,
wherein the silicone-based (meth)acrylate (A) is a monomer having a siloxanyl group in a molecule.

38. The curable composition according to Claim 29,
wherein the hydrophilic monomer (B) is a monomer having, in a molecule, one or more groups selected from a hydroxyl group, an amino group, a carboxyl group, an ionic group, an amide structure, and a polyalkylene oxide group.

39. A method for producing the curable composition according to any one of Claims 29 to 38,
wherein the hydrophilic monomer (B) is a monomer (B1) having an amide structure.

40. A method for producing a silicone hydrogel, comprising the following steps (1) to (3):
a step (1): a step of preparing a curable composition containing a silicone-based (meth)acrylate (A), a hydrophilic monomer (B), and two or more kinds of surfactants (C);
a step (2): a step of molding the curable composition with a hydrophobic mold to obtain a cured product; and
a step (3): a step of washing the cured product.

41. The method for producing a silicone hydrogel according to Claim 40,
wherein at least one of the two or more kinds of the surfactants (C) is a sugar fatty acid ester (C2).

42. The method for producing a silicone hydrogel according to Claim 40,
wherein at least one of the two or more kinds of the surfactants (C) is a sugar fatty acid ester (C2), and the other is a surfactant other than the sugar fatty acid ester (C2).

43. The method for producing a silicone hydrogel according to Claim 42,
wherein the surfactant other than the sugar fatty acid ester (C2) is a surfactant having a polyoxyethylene group.

44. The method for producing a silicone hydrogel according to Claim 43,
wherein the surfactant having a polyoxyethylene group is any one of polyoxyethylene hydrogenated castor oils, polyoxyethylene castor oil, polyoxyethylene glycerin fatty acid ester, or polyoxyethylene alkylene ether.

45. The method for producing a silicone hydrogel according to Claim 40,
wherein the hydrophobic mold is a mold made of polyolefin.

46. The method for producing a silicone hydrogel according to Claim 40,
wherein the silicone hydrogel is not subjected to a plasma treatment.

47. A method for producing a contact lens using the method for producing a silicone hydrogel according to any one of Claims 40 to 46.
